(19) **Europäisches Patentamt / European Patent Office / Office européen des brevets**

(11) **EP 4 609 724 A1**

(12) **EUROPEAN PATENT APPLICATION**
published in accordance with Art. 153(4) EPC

(43) Date of publication:
**03.09.2025 Bulletin 2025/36**

(21) Application number: **23882783.6**

(22) Date of filing: **27.10.2023**

(51) International Patent Classification (IPC):
***A23L 5/43*** (2016.01)

(52) Cooperative Patent Classification (CPC):
**A23L 5/43**

(86) International application number:
**PCT/JP2023/039001**

(87) International publication number:
**WO 2024/090582 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 JP 2022173312**

(71) Applicant: **San-Ei Gen F.F.I., INC.**
**Toyonaka-shi, Osaka 561-8588 (JP)**

(72) Inventors:
• **INIWA, Minoru**
**Toyonaka-shi, Osaka 561-8588 (JP)**
• **MURAOKA, Saori**
**Toyonaka-shi, Osaka 561-8588 (JP)**
• **ISHIBASHI, Ryo**
**Toyonaka-shi, Osaka 561-8588 (JP)**

(74) Representative: **Vossius & Partner**
**Patentanwälte Rechtsanwälte mbB**
**Siebertstrasse 3**
**81675 München (DE)**

(54) **ACID-RESISTANT GARDENIA BLUE PREPARATION**

(57)     Provided are an acid-resistant gardenia blue colorant preparation and an acid-resistant gardenia blue colorant preparation that are inhibited from foaming. Provided is an acid-resistant gardenia blue colorant preparation comprising (A) gardenia blue colorant and (B) at least one member selected from the group consisting of propylene glycol alginate, carboxymethyl cellulose, salts of carboxymethyl cellulose, and soybean polysaccharides, in which the proportion of each component (B) per color value of 30 of the gardenia blue colorant is as follows:
(1) propylene glycol alginate: 0.2 to 3 mass%; (2) carboxymethyl cellulose: 0.5 to 2 mass%; and (3) soybean polysaccharides: 5 to 20 mass%.

EP 4 609 724 A1

**Description**

Reference to Related Applications

This application claims priority based on Japanese Patent Application No. 2022-173312 filed on October 28, 2022, the entire disclosure of which is incorporated herein by reference.

Technical Field

The present invention relates to an acid-resistant blue colorant preparation containing gardenia blue colorant (in the present invention, this preparation is referred to as an "acid-resistant gardenia blue preparation"), and to a colored composition comprising the acid-resistant gardenia blue preparation. The present invention further relates to a method for inhibiting gardenia blue colorant from aggregation under acidic conditions by imparting acid resistance to the colorant. Further, the present invention relates to a method for inhibiting foaming of a colored composition comprising an acid-resistant gardenia blue preparation. Further, the present invention relates to a method for preparing a colored composition with high clarity by maintaining acid resistance of the colored composition while inhibiting foaming of the colored composition.

Background Art

Gardenia blue colorant is a water-soluble blue colorant that can be prepared by adding β-glucosidase to a mixture of iridoid glycoside and protein hydrolysate. Since gardenia blue colorant is a natural colorant, it is possible to design products that meet preferences of consumers who prefer natural materials, and gardenia blue colorant has been used to color a variety of compositions, including foods and beverages, quasi-drugs, and pharmaceuticals. However, in general, gardenia blue colorant has problems in that it tends to aggregate and become insoluble in aqueous solutions in an acidic pH range and it lacks acid resistance. Specifically, since gardenia blue colorant aggregates under acidic conditions of a pH of 4.5 or lower, color values of colored compositions such as blue colorant preparations containing gardenia blue colorant or foods and beverages colored with gardenia blue colorant are reduced. Further, when the amount of aggregates formed increases, precipitation occurs, which causes blue colorant preparations and colored compositions to lose their commercial value.

Therefore, a problem pointed out with gardenia blue colorant is that gardenia blue colorant cannot be used to color acidic compositions (for example, acidic edible compositions, such as acidic foods and beverages).

As methods for solving this problem, the following methods have been proposed:

a method of stabilizing gardenia blue colorant by homogeneously adding pectin or other pectins (pectinic acid, pectinic acid, methoxyl pectin), and/or a glycerin fatty acid ester to gardenia blue colorant (Patent Literature (PLT) 1);
a method of stably dissolving gardenia blue colorant in an acidic range by adding lecithin to gardenia blue colorant (PTL 2); and
a method of imparting acid resistance to a gardenia colorant preparation with a color value of 5 or more and 500 or less by adding gum ghatti and/or gum arabic to gardenia blue colorant (PTL 3).

Citation List

Patent Literature

PTL 1: JP1987-19067A
PTL 2: WO2017/057187
PTL 3: JP2019-143145A
PTL 4: WO2016/068330

Non-patent Literature

NPL 1: Nakamura, H. et al., Biosci Biotechnol. Biochem., 65, 2249-2258 (2001)
NPL 2: Nakamura, H. et al., Biosci Biotechnol. Biochem., 66, 1301-1313 (2002)

NPL 3: FFI Reports, "Characteristics and Applications of Soybean Polysaccharides," FFI Journal, Vol. 225, No. 3, 302-306 (2020)

Summary of Invention

Technical Problem

A first object of the present invention is to overcome the problem of gardenia blue colorant being prone to aggregate under acidic pH conditions. In particular, it is difficult to achieve stable coloring of acidic beverages over a long period by using gardenia blue colorant. Accordingly, an object of the present invention is to provide an acid-resistant gardenia blue colorant preparation capable of stably coloring, in particular, acidic beverages by imparting acid resistance to gardenia blue colorant and inhibiting the gardenia blue colorant from aggregation in acidic aqueous solutions (an acid-resistant gardenia blue preparation).

A second object of the present invention is to reduce foaming that would occur due to the component added to impart acid resistance (polysaccharide) to gardenia blue colorant.

The present inventors conducted an experiment and found that when the acid-resistant gardenia blue colorant preparation is added to acidic beverages, vigorous foaming may occur depending on the conditions in the stirring step during preparation, and a phenomenon of significantly reduced work efficiency is observed. A typical process for preparing a colored carbonated beverage by using an acidic sugar solution comprises mixing an acidic sugar solution having a high Brix, which has been colored with a colorant preparation beforehand, with carbonated water and stirring. The present inventors conducted this experiment and confirmed that when a gardenia blue colorant preparation containing gardenia blue colorant and a specific polysaccharide is used as an acid-resistant preparation in the process of preparing a colored carbonated beverage as described above, vigorous foaming occurs in the step of mixing with carbonated water and stirring, and the air bubbles formed do not disappear but persist for a long time (residual foaming).

In view of the above, an object of the present invention is, in the production of colored acidic beverages (including colored carbonated beverages) using an acidic sugar solution, to provide an acid-resistant gardenia blue preparation capable of efficiently coloring acidic beverages while inhibiting foaming (which may be referred to herein as an "anti-foaming acid-resistant gardenia blue preparation"), and a syrup containing the acid-resistant gardenia blue preparation.

A third object of the present invention is to provide a method for preparing a colored composition with clarity in the form of a solution by inhibiting foaming of a colored composition in the form of a solution containing gardenia blue colorant and a polysaccharide that imparts acid resistance to the gardenia blue colorant while maintaining the acid resistance of the colored composition.

Solution to Problem

In order to achieve the first object, the present inventors conducted much diligent research and found that that when at least one polysaccharide selected from the group consisting of propylene glycol alginate (referred to below as "PGA"), carboxymethyl cellulose (referred to below as "CMC"), salts of CMC, and soybean polysaccharides is added to gardenia blue colorant, acid resistance can be imparted to the gardenia blue colorant, and insolubilization (aggregate formation) of the gardenia blue colorant in acidic aqueous solutions can be significantly inhibited.

As stated above, the present inventors found the problem that when a gardenia blue colorant preparation containing a polysaccharide whose acid resistance has been confirmed in the research described above (e.g., PGA, CMC or a salt thereof, or soybean polysaccharide) ("acid-resistant gardenia blue preparation") is added to an acidic sugar solution having a high Brix and the resulting mixture is stirred for dissolution, foaming is prone to occur and the air bubbles formed do not easily disappear (residual foaming).

Accordingly, in order to solve this problem (the second problem), the present inventors further conducted much research and found that the foaming problem and the residual foaming problem can be solved by adding at least one member selected from the group consisting of lecithin and medium-chain fatty acid oils as a defoaming component when an acid-resistant gardenia blue preparation is prepared.

The present inventors further confirmed that when, in particular, at least one member selected from the group consisting of PGA, CMC, and salts of CMC among the above polysaccharides is used, high acid resistance can be imparted to gardenia blue colorant even when a defoaming component, such as those mentioned above, is used together and that while inhibiting foaming of a colored composition in the form of a solution containing gardenia blue colorant (a colored solution), the formation of aggregates in the solution can be significantly inhibited, thus providing a colored solution with clarity.

The present invention has been accomplished as a result of diligent research based on these various findings. The present invention includes the following embodiments.

(I) Acid-resistant gardenia blue preparation

(I-1) An acid-resistant gardenia blue preparation comprising:

(A) gardenia blue colorant; and
(B) at least one member selected from the group consisting of PGA, CMC, salts of CMC, and soybean polysaccharides,

wherein the proportion of each component (B) per color value of 30 of the gardenia blue colorant is as follows:

(1) PGA: 0.2 to 3 mass%;
(2) CMC: 0.5 to 2 mass%;
(3) soybean polysaccharides: 5-20 mass%.

(I-2) The acid-resistant gardenia blue preparation according to (I-1), further comprising at least one defoaming component selected from the group consisting of lecithin and medium-chain fatty acid oils.
(I-3) The acid-resistant gardenia blue preparation according to (I-1) or (I-2), wherein component (B) is at least one member selected from the group consisting of PGA, CMC, and salts of CMC.
(I-4) The acid-resistant gardenia blue preparation according to any one of (I-1) to (I-3), which is in the form of a powder.

(II) Composition colored with acid-resistant gardenia blue preparation

(II-1) A colored composition comprising the acid-resistant gardenia blue preparation of any one of (I-1) to (I-4).
(II-2) The colored composition according to (II-1), wherein the composition is an acidic composition.
(II-3) The colored composition according to (II-1) or (II-2), wherein the composition is an acidic sugar solution having a Brix of 20 to 80.
(II-4) The colored composition according to (II-1) or (II-2), which is a food or beverage.
(II-5) The colored composition according to (II-1) or (II-2),

which is an acidic beverage, preferably a carbonated beverage.
(III) Method for imparting acid resistance (method for inhibiting aggregation under acidic conditions)

(III-1) A method for imparting acid resistance to gardenia blue colorant to inhibit aggregation under acidic conditions, the method comprising
allowing (B) at least one member selected from the group consisting of PGA, CMC, salts of CMC, and soybean polysaccharides to be present with (A) gardenia blue colorant.
(III-2) The method according to (III-1), comprising allowing component (B) to be present with the gardenia blue colorant in the following proportion per color value of 30 of the gardenia blue colorant:

(1) PGA: 0.2 to 3 mass%;
(2) CMC: 0.5 to 2 mass%;
(3) soybean polysaccharides: 5-20 mass%.

(IV) Method for inhibiting foaming (foaming inhibition method)

(IV-1) A method for inhibiting foaming of a colored composition in the form of a solution containing components (A) and (B), the method comprising allowing component (C) to be present together in a solution containing components (A) and (B), wherein components (A), (B), and (C) are the following:

(A): gardenia blue colorant;
(B): at least one member selected from the group consisting of PGA, CMC, salts of CMC, and soybean polysaccharides; and
(C) at least one member selected from the group consisting of lecithin and medium-chain fatty acid oils.

(IV-2) The method according to (IV-1), wherein the colored composition is an acidic sugar solution having a Brix of 20 to 80.
(IV-3) The method according to (IV-1), wherein the colored composition is an acidic beverage, preferably a carbonated beverage.

(IV-4) The method according to any one of (IV-1) to (IV-3), wherein the proportion of component (B) per color value of 30 of the gardenia blue colorant in the composition is as follows:

(1) PGA: 0.2 to 3 mass%;
(2) CMC: 0.5 to 2 mass%;
(3) soybean polysaccharides: 5-20 mass%.

(V) Method for preparing an anti-foaming acid-resistant colored composition with clarity in the form of a solution

(V-1) A method for preparing a colored composition in the form of a solution containing components (A) and (B), the method being for inhibiting foaming of the colored composition, maintaining acid resistance of the colored composition, and providing the colored composition with clarity,

the method comprising
allowing component (C) to be present together in a solution containing components (A) and (B),
wherein components (A), (B), and (C) are the following:

(A): gardenia blue colorant;
(B): at least one member selected from the group consisting of PGA, CMC, and salts of CMC; and
(C): at least one member selected from the group consisting of lecithin and medium-chain fatty acid oils.

(V-2) The method according to (V-1), comprising blending components (A) and (B) in such amounts that the proportion of component (B) per color value of 30 of the gardenia blue colorant (A) falls within the following range:

(1) PGA: 0.2 to 3 mass%;
(2) CMC: 0.5 to 2 mass%;
(3) soybean polysaccharides: 5-20 mass%.

Advantageous Effects of Invention

By using the acid-resistant gardenia blue preparation of the present invention as a gardenia blue colorant preparation, the insoluble matter (aggregates) of gardenia blue colorant, which is likely to be formed in acidic aqueous solutions at a pH of 4.5 or less, can be significantly inhibited from forming. That is, the present invention can provide an acid-resistant gardenia blue preparation that is resistant to acids and that is inhibited from aggregation (insolubilization) in an acidic aqueous solution.

Among the acid-resistant gardenia blue preparations of the present invention, in particular, those containing a defoaming component have the property of inhibiting foaming (also referred to below as "anti-foaming properties") as well as acid resistance (inhibition of aggregate formation) as described above. Therefore, the foaming problem and the residual foaming problem, which particularly occur in coloring acidic sugar solutions (preferably high-Brix acidic sugar solutions) or acidic beverages (preferably carbonated beverages), can be inhibited.

Among the acid-resistant gardenia blue preparations according to the present invention, acid-resistant gardenia blue preparations containing at least one member selected from the group consisting of PGA, CMC, and salts of CMC as a polysaccharide and further containing a defoaming component have high acid resistance (inhibition of aggregate formation) in addition to anti-foaming properties described above. Therefore, such acid-resistant gardenia blue preparations can be effectively used for preparing clear acidic sugar solutions or acidic beverages while inhibiting foaming and residual foaming, which become problems, in particular, at the time of coloring acidic sugar solutions or acidic beverages.

Brief Description of Drawings

Fig. 1 shows the results of evaluating acid resistance of gardenia blue colorant in an aqueous solution containing a polysaccharide and gardenia blue colorant (test solution: Brix 0, pH of 3.5) in Experimental Example 3 (4).
Fig. 2 shows the results of evaluating acid resistance of gardenia blue colorant in an aqueous solution containing a polysaccharide and gardenia blue colorant (test solution: Brix 30, pH of 3.5) in Experimental Example 3 (4).
Fig. 3 shows the results of evaluating acid resistance of gardenia blue colorant in an aqueous solution containing a polysaccharide and gardenia blue colorant (test solution: Brix 60, pH of 3.5) in Experimental Example 3 (4).

Fig. 4 shows the results of evaluating acid resistance of gardenia blue colorant in an aqueous solution containing gardenia blue colorant, a polysaccharide, and a defoaming component (test solution: Brix 0, pH of 3.5) in Experimental Example 5 (B).

Description of Embodiments

(I) Acid-resistant gardenia blue preparation

The acid-resistant gardenia blue preparation according to one embodiment of the present invention has a feature that it contains, in addition to gardenia blue colorant (component (A)), at least one polysaccharide selected from the group consisting of PGA, CMC, salts of CMC, and soybean polysaccharides (component (B)), and thus has acid resistance.

Further, the acid-resistant gardenia blue preparation according to another embodiment of the present invention has a feature that it contains a specific defoaming component (component (C)) in addition to components (A) and (B), and thus has anti-foaming properties as well as acid resistance.

Component (A): Gardenia blue colorant

Gardenia blue colorant (Gardenia Blue) is defined as follows in the Japan's Specifications and Standards for Food Additives, 9th edition (Ministry of Health, Labour and Welfare of Japan) :

"Gardenia blue is obtained by adding $\beta$-glucosidase to a mixture of iridoid glycoside and protein hydrolysate obtained from the fruit of *Gardenia jasminoides* Ellis (*Gardenia augusta Merr*).
Gardenia blue may contain dextrin or lactose."

The gardenia blue colorant used in the present invention includes the gardenia blue colorant specified in the above definition.

The method for producing the gardenia blue colorant used in the present invention, and the raw materials to be used in the production method (e.g., gardenia fruit, iridoid glycosides obtained from gardenia fruit, protein hydrolysates, $\beta$-glucosidase) are known (see, for example, PTL 2 and PTL 4). The gardenia blue colorant used in the present invention can be produced using such known raw materials by or according to a known production method.

The gardenia blue colorant used in the present invention can be a gardenia blue colorant produced by a known production method or a commercially available gardenia blue colorant.

Color Value

In the present invention, the "color value" of gardenia blue colorant means "color value $E^{10\%}_{1cm}$." "Color value $E^{10\%}_{1cm}$" is a value calculated by measuring the absorbance of a 10% (w/v) gardenia blue colorant aqueous solution at the maximum absorption wavelength ($\lambda$max) in the visible light region (referred to below as "the absorbance ($\lambda$max)") by using a measurement cell with an optical path length of 1 cm. In the present specification, "color value" may be abbreviated as "CV," and "color value of 30" may be abbreviated as "CV30." The maximum absorption wavelength of gardenia blue colorant is in the range of 570 to 610 nm.

A specific method for calculating the color value of a test sample can be, for example, a method following the method described in Japan's Specifications and Standards for Food Additives, 9th Edition (Ministry of Health, Labour and Welfare of Japan). The color value can be calculated according to the following formula.

Color Value

$$\text{Color value } E^{10\%}_{1cm} = (10 \times A \times F) / \text{Amount of test sample collected (g)}$$

F: Dilution factor for adjusting measured absorbance to fall within the range of 0.3 to 0.7
A: Measured absorbance

The term "measured absorbance" refers to the absorbance of gardenia blue colorant at the maximum absorption wavelength ($\lambda$max).

In the present invention, "the proportion of component (B) per color value of 30 of gardenia blue colorant is P mass%" (wherein P represents any numeral) means that when a target acid-resistant gardenia blue preparation (test sample) is formed into a 10% (w/v) gardenia blue colorant aqueous solution with an absorbance (λmax) of 300, the amount of component (B) contained in the aqueous solution is P mass%.

When the target acid-resistant gardenia blue preparation is formed into, for example, a 10% (w/v) gardenia blue colorant aqueous solution with an absorbance (λmax) of 100 (CV10), the amount of component (B) contained in the aqueous solution is P × 1/3 mass%. Further, when the target acid-resistant gardenia blue preparation is formed into a 10% (w/v) aqueous gardenia blue colorant solution with an absorbance (λmax) of 3000 (CV300), the amount of component (B) contained in the aqueous solution is P × 10 mass%.

Similarly, in the present invention, "the proportion of component (C) per color value of 30 of gardenia blue colorant is Q mass%" (wherein Q is any numeral) means that when the target acid-resistant gardenia blue preparation is formed into a 10% (w/v) aqueous gardenia blue colorant solution with an absorbance (λmax) of 300, the amount of component (C) contained in the aqueous solution is Q mass%.

Component (B): PGA

PGA is an alginic acid derivative obtained by ester-bonding propylene glycol to alginic acid extracted from seaweed. PGA is a type of thickening polysaccharide that has been used as a food stabilizer or a thickener. Since an aqueous solution of PGA is acidic (pH: about 3.5 to 4.5 at a concentration of 1 mass%), PGA does not become insoluble even in foods and beverages with a low pH, such as fruit juices and carbonated drinks. Further, due to being less likely to gel easily even in contact with calcium, PGA can also be applied to dairy products that are rich in calcium. Further, PGA is known to be also usable as a stabilizer or thickener for foods and beverages with high salt concentrations or high alcohol concentrations.

The PGA used in the present invention is not limited to esters in which propylene glycol is ester-bonded to all the carboxyl groups of alginic acid (degree of esterification: 100%), but also includes esters in which propylene glycol is ester-bonded to some of the carboxyl groups of alginic acid and unreacted free acid moieties or moieties of salts, such as sodium salts or calcium salts, remain on some of the other carboxyl groups.

The degree of esterification of PGA is not limited, but is preferably at least 40% or more, and more preferably 70 to 90%.

The PGA used in the present invention is not limited but preferably has a degree of polymerization such that when the PGA is formed into a 1 mass% PGA aqueous solution, the solution has a viscosity in the range of about 10 to 250 mPa·s, preferably 60 to 100 mPa·s. The viscosity as referred to herein is a value obtained by measurement with a rotational viscometer at 20°C and 30 rpm (using a rotor as appropriate) for 1 minute.

In particular, from the viewpoint of imparting acid resistance, the amount of PGA to be blended with the gardenia blue colorant can be, for example, a proportion of 0.2 to 3 mass% per color value of 30 of the gardenia blue colorant. In other words, the PGA content in 100 mass% of the acid-resistant gardenia blue preparation adjusted to a color value of 30 is 0.2 to 3 mass%. The mass% per color value of 30 of the gardenia blue colorant is referred to below as "mass%/CV30." However, as the amount of PGA blended increases, the viscosity increases and ease of handling decreases. Therefore, it is desirable to keep the upper limit of the amount of PGA blended below 3 mass%/CV30. Accordingly, the upper limit of the amount of PGA blended can be, for example, 3 mass%/CV30, 2 mass%/CV30, 1.5 mass%/CV30, or 1 mass%/CV30. The lower limit of the amount of PGA blended can be, for example, 0.2 mass%/CV30, 0.3 mass%/CV30, 0.4 mass%/CV30, or 0.5 mass%/CV30. The amount of PGA blended with gardenia blue colorant can be set by arbitrarily combining these upper and lower limits.

Although not limited, the proportion of PGA blended per color value of 30 of the gardenia blue colorant is preferably in the range of 0.3 to 2 mass%, more preferably 0.4 to 1.5 mass%, and even more preferably 0.5 to 1 mass%.

Component (B): CMC or a salt thereof

Although the CMC to be used in the present invention is not limited, the CMC preferably has such a molecular weight that when the CMC is formed into a 1 mass% CMC aqueous solution, the solution has a viscosity in the range of 150 to 250 mPa·s. The viscosity as referred to herein is a value obtained by measurement with a rotational viscometer at 25°C and 30 rpm (using a rotor as appropriate) for 1 minute. Such CMCs include those with a degree of etherification (mol/C6) in the range of 0.55 to 0.65.

As long as the effect of the present invention is provided, CMC is not limited to free CMC but can be in the form of a salt (sodium salt, potassium salt, calcium salt). The salt of CMC is preferably a sodium salt of CMC.

In particular, from the viewpoint of imparting acid resistance, the amount of CMC or a salt of CMC to be blended with the gardenia blue colorant can be, in terms of the amount of CMC (the same applies below), for example, 0.5 to 2 mass% per color value of 30 of the gardenia blue colorant. In other words, the CMC content in 100 mass% of an acid-resistant gardenia blue preparation adjusted to a color value of 30 is 0.5 to 2 mass%.

Although this is not limitative, a preferred proportion of CMC per color value of 30 of the gardenia blue colorant can be, for example, 1 to 2 mass%.

Component (B): Soybean polysaccharides

Soybean polysaccharides are water-soluble polysaccharides that contain galactose, arabinose, and galacturonic acid as main constituent sugars and that further contain rhamnose, fucose, xylose, and glucose. Soybean polysaccharides are generally produced using water-insoluble dietary fibers (*okara*) obtained in the production of soy protein from defatted soybeans through the steps of hot-water extraction, purification, sterilization, and drying. The average molecular weight of soybean polysaccharides is estimated to be several hundred thousand, and their molecular structure is assumed to comprise a main chain structure consisting of rhamnogalacturon and galacturon, to which relatively long neutral sugars consisting of galactose and arabinose are bonded as side chains (see NPL 1 and NPL 2) .

Such soybean polysaccharides are known to be added as sour-milk stabilizers to acidic milk beverages in order to inhibit aggregation and precipitation of milk proteins under acidic conditions (NPL 3). However, it is not known that soybean polysaccharides have the effect of inhibiting aggregation of gardenia blue colorant under acidic conditions.

Soybean polysaccharides are commercially available. Examples include SM-700, SM-900, SM-1600, and SM-640, all produced by San-Ei Gen F.F.I., Inc.; and SOYAFIBE-S-DN (MS-700) produced by Fuji oil Co., Ltd.

The soybean polysaccharide used in the present invention preferably has such a molecular weight that when the soybean polysaccharide is formed into a 1 mass% soybean polysaccharide aqueous solution, the solution has a viscosity in the range of 30 to 40 mPa·s. The viscosity is a value obtained by measurement with a rotational viscometer at 25°C and 30 rpm (using a rotor as appropriate) for 1 minute.

In particular, from the viewpoint of imparting acid resistance, the amount of soybean polysaccharides to be blended relative to gardenia blue colorant can be, for example, 5 to 20 mass% per color value of 30 of the gardenia blue colorant. In other words, this means that the soybean polysaccharide content in 100 mass% of an acid-resistant gardenia blue preparation adjusted to a color value of 30 is 5 to 20 mass%. The upper limit of the amount of soybean polysaccharides blended can be, for example, 20 mass%/CV30 or 10 mass%/CV30. The lower limit of the amount of soybean polysaccharides blended can be, for example, 5 mass%/CV30 or 10 mass%/CV30. The amount of soybean polysaccharides blended relative to the gardenia blue colorant can be set by arbitrarily combining these upper and lower limits. The proportion of soybean polysaccharides per color value of 30 of gardenia blue colorant can be, for example, 5 to 10 mass% or 10 to 20 mass%, although this is not limitative.

The acid-resistant gardenia blue preparation of the present invention contains gardenia blue colorant in such a state that the gardenia blue colorant is present with at least one component (B) described above, and therefore, the acid-resistant gardenia blue preparation of the present invention has a feature of having excellent acid resistance. Only one component (B) or any combination of two or more components (B) can be used with the gardenia blue colorant. The component (B) is preferably at least one member selected from the group consisting of PGA, CMC, and soybean polysaccharides, and more preferably at least one member selected from the group consisting of PGA and CMC, and particularly preferably CMC.

In general, gardenia blue colorant is a water-soluble blue colorant. When an aqueous solution containing gardenia blue colorant has a pH of 4.5 or below, aggregation occurs and gardenia blue colorant becomes insoluble, resulting in a decrease in color value. Further, as the pH decreases, the amount of aggregates (insoluble matter) increases, and ultimately the gardenia blue colorant precipitates. In contrast, the acid-resistant gardenia blue preparation of the present invention containing component (B), has excellent acid resistance, and the gardenia blue colorant is less likely to aggregate even in an aqueous solution with a pH of 4.5 or less. Therefore, the acid-resistant gardenia blue preparation of the present invention can stably color the composition to be colored (the target composition) even under acidic conditions at a pH of 4.5 or less. In particular, the acid-resistant gardenia blue preparation of the present invention has the advantage of being excellent in color stability under conditions of a pH of 3 to 3.5. In the present specification, "acidic" means a pH of 4.5 or less unless otherwise specified. A pH of 3 to 3.5 is preferable.

That is, in the present invention, "acid resistance" means inhibition of aggregate formation (resistance to aggregation, resistance to being insoluble) in an acidic aqueous solution having a pH of 4.5 or less (preferably a pH of 3 to 3.5). Further, as a feature derived from this inhibition, "acid resistance" can further mean color value stability under acidic conditions at a pH of 4.5 or less (preferably a pH of 3 to 3.5).

The acid resistance of the acid-resistant gardenia blue preparation of the present invention can be evaluated by measuring the degree of aggregation (amount of aggregates) that occurs when an acid-resistant preparation containing gardenia blue colorant and at least one component (B) according to the present invention (test preparation) and a gardenia blue colorant preparation having the same composition as the test preparation except that the composition contains no component (B) (control preparation) are allowed to stand in an acidic aqueous solution (e.g., an aqueous solution at a pH of 3.5) and comparing the turbidity by visual inspection or measuring the absorbance at an absorption wavelength of 720 nm (also referred to below as "absorbance (720 nm)"). When the test preparation is less turbid (the amount of aggregates is smaller) than the control preparation as determined by visual inspection or measurement of absorbance (720 nm), the test preparation can be determined to be acid-resistant. As a specific evaluation method by visual inspection, reference can be made, for example, to the method described in Experimental Example 1 below. As a specific evaluation method by measurement of absorbance (720 nm), reference can be made, for example, to the methods described below in Experimental Examples 2 to 4.

The acid resistance of the acid-resistant gardenia blue preparation of the present invention can also be evaluated by measuring the absorbance ($\lambda$max) of an acidic aqueous solution containing the gardenia blue colorant preparation (test preparation) (the absorbance of the gardenia blue colorant at the maximum absorption wavelength) instead of the visual inspection or absorbance (720 nm) measurement described above.

Specifically, an acidic aqueous solution containing a gardenia blue colorant preparation (test preparation) is allowed to stand, and then the absorbance ($\lambda$max) is measured before and after filtration through a pore size of 0.2 $\mu$m. The ratio (%) of the absorbance ($\lambda$max) after filtration to the absorbance ($\lambda$max) before filtration (100%) is calculated. The closer to 100% the ratio is, the lower the degree of aggregation of gardenia blue colorant under acidic conditions is, and the test preparation can be determined to be acid-resistant. In contrast, a lower ratio means a higher degree of aggregation of gardenia blue colorant under acidic conditions, and a test preparation having a low ratio can be determined to have low acid resistance.

For specific evaluation methods, reference can be made to the methods described below in Experimental Examples 2 to 4.

The color value of the acid-resistant gardenia blue preparation of the present invention is in the range of 5 to 500 and can be appropriately adjusted depending on the purpose of coloring. A preferable color value of the acid-resistant gardenia blue preparation is 5 to 300, and more preferably 20 to 200.

Component (C): Defoaming component

The acid-resistant gardenia blue preparation of the present invention may contain a defoaming component in addition to gardenia blue colorant and at least one component (B) described above. The defoaming component (C) can be preferably, for example, at least one member selected from lecithin and medium-chain fatty acid oils.

Lecithin is primarily composed of phospholipids obtained from oil seeds (plant materials) or animal materials. Examples of phospholipids include phosphatidylcholine, phosphatidylethanolamine, phosphatidylinositol, phosphatidic acid, and enzyme-treated products thereof (e.g., lysophosphatidylcholine, which is an enzymatic decomposition product of phosphatidylcholine). Representative examples of such lecithin include, but are not limited to, vegetable lecithin (limited to those derived from rapeseed or soybean seeds, for example, soybean lecithin), sunflower lecithin, and egg yolk lecithin. The lecithin may be liquid lecithin containing oil, dried lecithin obtained by drying to remove oil from liquid lecithin (e.g., powdered lecithin), fractionated lecithin obtained by fractionating and purifying liquid lecithin, enzyme-treated lecithin obtained by enzymatically treating lecithin, or enzymatically decomposed lecithin. All of these are commercially available. The lecithin is preferably one that has not been enzymatically treated or decomposed.

When lecithin is added, the proportion of lecithin in 100 mass% of the acid-resistant gardenia blue preparation is not limited, but can be appropriately selected from the range of 0.001 to 10 mass% per color value of 30 of the gardenia blue colorant contained in the acid-resistant gardenia blue preparation. In other words, it means that the lecithin content in 100 mass% of the acid-resistant gardenia blue preparation adjusted to a color value of 30 is 0.001 to 10 mass%. The lecithin content is preferably 0.005 to 5 mass%/CV30, and more preferably 0.01 to 1 mass%/CV30.

Medium-chain fatty acid oils refer to oils in which fatty acids that constitute fats or oils are of medium chain length. Medium-chain fatty acid oils are also referred to as "medium-chain triglycerides" (MCT). Therefore, medium-chain fatty acid oils are also simply referred to as "MCT." Typically, medium-chain fatty acid oils refer to oils composed of fatty acids having 6 to 12 carbon atoms, preferably 8 to 12 carbon atoms, fatty acids having 8 to 11 carbon atoms, or oils composed of fatty acids having 8 to 10 carbon atoms. Examples of medium-chain fatty acids include hexanoic acid (caproic acid; $C_6$), octanoic acid (caprylic acid; $C_8$), nonanoic acid (pelargonic acid; $C_9$), decanoic acid (capric acid; $C_{10}$), and dodecanoic acid (lauric acid; $C_{12}$).

Since MCT is present in fats and oils contained in plants, such as palm plants, including coconuts and palm fruits, and in dairy products, such as milk, medium-chain fatty acid oils obtained by subjecting such fats and oils (preferably vegetable fats and oils, such as palm kernel oil) to extraction (including crude extraction) or purification (including crude purification) can be used as they are or as a raw material. Alternatively, products obtained by chemical synthesis methods or commercially available products can also be used as medium-chain fatty acid oils.

When a MCT is incorporated, the proportion of MCT in 100 mass% of the acid-resistant gardenia blue preparation is not limited, but can be appropriately selected from the range of 0.001 to 10 mass% per color value of 30 of the gardenia blue colorant contained in the acid-resistant gardenia blue preparation. In other words, this means that the MCT content in 100 mass% of the acid-resistant gardenia blue preparation adjusted to a color value of 30 is 0.001 to 10 mass%. The content is preferably 0.005 to 5 mass%/CV30, and more preferably 0.01 to 1 mass%/CV30.

Lecithin or MCT can be incorporated into the acid-resistant gardenia blue preparation. However, in order to obtain a high defoaming effect, lecithin and MCT are both preferably incorporated into the acid-resistant gardenia blue preparation. When lecithin and MCT are incorporated in combination into the acid-resistant gardenia blue preparation, the content ratio (mass ratio) of lecithin to MCT is not limited but is preferably in the range of 2:8 to 5:5, and more preferably 3:7 to 5:5.

The acid-resistant gardenia blue preparation of the present invention that contains a defoaming component in addition to gardenia blue colorant and component (B) (anti-foaming acid-resistant gardenia blue preparation) can more efficiently inhibit foaming that would occur at the time of adding the gardenia blue preparation to the target object (composition to be colored) and mixing than the corresponding acid-resistant gardenia blue preparation that contains no defoaming component, and has the effects of being easy to handle and easy to work with. Therefore, the anti-foaming acid-resistant gardenia blue preparation of the present invention can be suitably used for colored compositions that are prone to foam, compositions in which bubbles, once formed, do not disappear easily but persist, or compositions in which the presence of air bubbles is undesirable, in particular, acidic compositions of these types of compositions.

Examples of such acidic compositions include, but are not limited to, acidic aqueous solutions having a Brix of 0 to 80%, preferably acidic sugar solutions having a Brix of 10 to 80%, and acidic beverages (e.g., carbonated beverages, non-carbonated beverages, and alcoholic beverages).

In the present invention, "Brix" is a value that indicates the concentration (percentage; %) of soluble solids dissolved in a test sample. Specifically, Brix is a reading measured at 20°C using a Brix sugar refractometer.

The acidic sugar solution is an acidic aqueous solution containing at least one saccharide selected from the group consisting of monosaccharides and disaccharides. Examples of monosaccharides include fructose, glucose, and galactose. Examples of disaccharides include sucrose, maltose, and lactose. The sugar solution may contain one of the monosaccharides and disaccharides alone, or may be a mixture containing any combination of two or more of these. The mixture is, for example, isomerized sugar, which is a mixture of glucose and fructose produced from starch. The isomerized sugar includes glucose-fructose liquid sugar (fructose content: less than 50%), fructose-glucose liquid sugar (fructose content: 50% or more and less than 90%), high-fructose liquid sugar (fructose content: 90% or more), and sugar-mixed isomerized liquid sugar (glucose-fructose liquid sugar or fructose-glucose liquid sugar with 10% or more sugar added).

The sugar solution is preferably isomerized sugar, more preferably fructose-glucose liquid sugar.

The acidic sugar solution preferably has a Brix of 30 to 80%, more preferably 50 to 80%, and even more preferably 60 to 70%.

The acid-resistant gardenia blue preparation of the present invention can be prepared by incorporating, for example, excipients, disintegrants, binders, surfactants, wetting agents, lubricants, pH adjusters, preservatives, or flavors, in addition to the gardenia blue colorant and component (B) described above, or in addition to the gardenia blue colorant, component (B), and component (C) described above, as long as such additives do not impair the effects of the present invention.

The acid-resistant gardenia blue preparation of the present invention, which contains gardenia blue colorant and component (B) but does not contain component (C), can be prepared by mixing and dissolving gardenia blue colorant and component (B) in a solvent capable of easily dissolving such components. The resulting solution can be formulated as a liquid preparation as it is, or can be, for example, concentrated or dried as necessary to formulate the solution into a semi-solid or solid preparation. The dosage form (e.g., liquid, powder, granule, or tablet) of the acid-resistant gardenia blue preparation of the present invention is not particularly limited but is preferably a preparation in powder form. The solvent capable of easily dissolving such components is not limited, but is preferably water.

The anti-foaming acid-resistant gardenia blue preparation of the present invention that contains gardenia blue colorant, component (B), and component (C) is preferably formulated as an emulsion preparation because component (C) is oil-based. Specifically, for example, an emulsion obtained by emulsifying component (C) with an emulsifier in water (emulsified defoaming agent) is prepared in advance and then mixed with gardenia blue colorant, component (B), and water to formulate a preparation. Since component (B) has emulsifying properties, component (B) can also be used as an emulsifier for use in preparing an emulsified defoaming agent. The anti-foaming acid-resistant gardenia blue preparation can be formulated as a liquid emulsion preparation, or can be, for example, concentrated or dried as necessary to formulate the solution into a semi-solid or solid preparation. The dosage form (e.g., liquid, powder, granule, or tablet) of the acid-resistant gardenia blue preparation of the present invention is not particularly limited but is preferably a preparation in the form of a powder (powder preparation).

The mixing treatment is not limited, and can be carried out using a homogenizer (e.g., a high-pressure homogenizer, a Homo Disper, a homomixer, a polytron agitator, a colloid mill, or a nanomizer), a propeller stirrer, a paddle stirrer, etc. Mixing using a homogenizer is preferred because of its high mixing efficiency. The drying treatment is also not limited, and known methods, such as vacuum freeze drying, ventilation drying, spray drying, vacuum drying, and drum drying, can be used.

(II) Composition colored with acid-resistant gardenia blue preparation

The acid-resistant gardenia blue preparation of the present invention (including the anti-foaming acid-resistant gardenia blue preparation described above) has excellent acid resistance (inhibition of aggregate formation) even under acidic conditions at a pH of 4.5 or less. Therefore, the acid-resistant gardenia blue preparation of the present invention can be suitably used for coloring various compositions without limitation on the pH of the composition to be colored. In particular, the acid-resistant gardenia blue preparation of the present invention can be suitably used for coloring acidic compositions having a pH of 2 to 4, and more particularly acidic compositions having a pH of 2 to 3.5 or a pH of 3 to 3.5.

The target acidic composition to be colored is not particularly limited. Examples of the target acidic composition include foods and beverages, quasi-drugs, pharmaceuticals, and cosmetics. The target acidic composition is preferably foods and beverages with an acidic pH of 4.5 or less, and edible raw material compositions used for producing foods and beverages.

Acidic foods and beverages colored with the acid-resistant gardenia blue preparation of the present invention are not particularly limited, and examples include beverages (including soft drinks, carbonated beverages, lactic acid beverages, milk beverages, and alcoholic beverages), frozen sweets, desserts (e.g., jellies, bavarois, yogurt), sugar confectioneries (e.g., candies, gummies), chewing gum, jams, soups, pickles, and seasonings (e.g., dressings, sauces). Particularly preferred foods and beverages are beverages, desserts, or sweet confectioneries. Since food and drink products, such as beverages (in particular, carbonated beverages), desserts, and sugar confectioneries, often have a pH of around 3, it has been difficult to stably color them with conventional gardenia blue colorants. Furthermore, since many beverages, desserts, and sugar confectioneries are highly transparent, formation of agglomerates is likely to directly lead to a decrease in commercial value. In contrast, the acid-resistant gardenia blue preparation of the present invention can significantly inhibit the formation of aggregates or the precipitation of gardenia blue colorant even in foods and beverages with a pH of 4.5 or less, preferably 3.5 or less, and can stably color the target foods and beverages to a desired color tone.

The raw material composition for producing foods and beverages to be colored with the acid-resistant gardenia blue preparation of the present invention includes an acidic solution having a Brix of 0 to 80%, preferably an acidic sugar solution having a Brix of 20 to 80%, such as those described above. In particular, a high-Brix acidic sugar solution having a Brix of 50 to 80% is a raw material composition for producing foods and beverages that is suitably used for coloring acidic beverages.

An acidic sugar solution having a Brix of 50 to 80° and colored with the anti-foaming acid-resistant gardenia blue preparation containing component (C) in addition to component (B) has anti-foaming properties in addition to acid resistance. Therefore, when this acidic sugar solution is used in the production of foods and beverages, such as drinks, the resulting foods and beverages are less likely to foam, and even if foaming occurs, the bubbles formed easily disappear. In other words, an acidic sugar solution colored with the anti-foaming acid-resistant gardenia blue preparation containing component (C) in addition to component (B), and a colored food or beverage containing the acidic sugar solution have both acid resistance and anti-foaming properties, and the foaming problem at the time of production and the aggregate formation problem during storage are significantly inhibited. The acidic food or beverage in which foaming at the time of production and formation of aggregates during storage are particularly problematic is acidic beverages. In particular, carbonated drinks are acidic beverages in which foaming at the time of production is problematic.

The amount of the acid-resistant gardenia blue preparation of the present invention added to the target composition (composition to be colored) can be appropriately adjusted depending on the type of the composition and purpose. For example, the acid-resistant gardenia blue preparation of the present invention is preferably added in such amount that the gardenia blue colorant content of the composition to be colored is 0.01 to 0.2 mass%.

The coloring method of the present invention can be carried out by adding the acid-resistant gardenia blue preparation of the present invention to a target composition to be colored and mixing. Since the acid-resistant gardenia blue preparation of the present invention is acid-resistant, neither the time when the colorant preparation is added nor the production method are limited, and the composition can be colored in the same manner as conventional natural colorants or in a different manner.

(III) Method for imparting acid resistance (method for inhibiting aggregation under acidic conditions)

The present invention further provides a method for imparting acid resistance to gardenia blue colorant and inhibiting aggregation under acidic conditions.

This method can be carried out by allowing gardenia blue colorant to be present with at least one member selected from the group consisting of PGA, CMC, salts of CMC, and soybean polysaccharides (component (B)). The method for allowing gardenia blue colorant to be present with component (B) and the blending ratio of component (B) to gardenia blue colorant are as described above.

(IV) Foam inhibition method

The present invention also provides a method for inhibiting foaming of a solution containing gardenia blue colorant and component (B).

This method can be carried out by allowing at least one defoaming component selected from the group consisting of lecithin and medium-chain fatty acid oils (component (C)) to be present in a solution containing gardenia blue colorant and component (B). Examples of the solution include acidic aqueous solutions having a Brix of 0 to 80% (preferably acidic sugar solutions having a Brix of 20 to 80%, more preferably acidic sugar solutions having a Brix of 50 to 80%), and acidic beverages (e.g., carbonated beverages, non-carbonated beverages, and alcoholic beverages). The method for allowing a defoaming component to be present together in the solution containing gardenia blue colorant and component (B), and the blending ratio of each of components B and C to gardenia blue colorant are as described above.

(V) Method for preparing an acidic composition having anti-foaming properties and clarity

The present invention further provides a method for preparing an acidic composition comprising gardenia blue colorant and component (B), the method being for inhibiting foaming of the acid composition, maintaining acid resistance of the acidic composition, and providing the acidic composition with clarity.

This method can be carried out by allowing at least one defoaming component selected from the group consisting of lecithin and medium-chain fatty acid oils (component (C)) to be present together in a solution containing gardenia blue colorant and at least one component selected from the group consisting of PGA, CMC, and salts of CMC (component (B')).

Examples of the solution include acidic aqueous solutions having a Brix of 0 to 80% (preferably acidic sugar solutions having a Brix of 20 to 80%, more preferably acidic sugar solutions having a Brix of 50 to 80%) and acidic beverages (e.g., carbonated beverages, non-carbonated beverages, and alcoholic beverages). The method of allowing a defoaming component to be present together in a solution containing gardenia blue colorant and component (B'), and the blending ratio of each of components (B') and (C) to gardenia blue colorant are as described above.

In the present specification, the terms "comprising" and "containing" as used above include the meanings of consisting of and substantially consisting of.

Examples

The present invention is described below with reference to experimental examples in order to aid in understanding the configuration and effects of the present invention. However, the present invention is not limited in any way by these experimental examples. The following experiments were carried out at room temperature ($25 \pm 5°C$) under atmospheric pressure conditions unless otherwise stated. In the following, "%" means mass% and "parts" means parts by mass unless otherwise specified.

The materials used in the following experimental examples are as follows:

Powdered gardenia blue colorant (CV300): Powdered Sun Blue GB300 (produced by San-Ei Gen F.F.I., Inc.)

Gardenia blue colorant concentrate (CV253): Sun Blue GB concentrate (produced by San-Ei Gen F.F.I., Inc.)

Propylene glycol alginate (PGA): Product name Kimiloid LV (produced by Kimica Corporation) (viscosity of 1% aqueous solution: 60-100 mPa.s) (viscosity as measured with a rotational viscometer at 20°C and 30 rpm (using a rotor as appropriate) for 1 minute)

Xanthan gum: product name KELTROL T (produced by CP Kelco) Modified starch: product name Purity Gum BE (produced by Ingredion Inc.)

Carrageenan: product name GENU Hi-pHive (produced by CP Kelco) Native gellan gum: product name KELCOGEL LT100 (produced by CP Kelco)

Deacylated gellan gum: product name KELCOGEL (produced by CP Kelco)

Sodium alginate (with a high viscosity): product name Kimica Algin IL-6G (produced by Kimica Corporation) (viscosity of 1% aqueous solution: 50-80 mPa·s) (viscosity as measured with a rotational viscometer at 20°C and 30 rpm (with a rotor as appropriate) for 1 minute)

Sodium alginate (with a low viscosity): product name Kimica Algin ULV1 (produced by Kimica Corporation) (viscosity of 10% aqueous solution: 100-200 mPa·s) (viscosity as measured with a rotational viscometer at 20°C and 30 rpm (using a rotor as appropriate) for 1 minute)

Carboxymethylcellulose (CMC): product name SUNROSE F20LC (produced by Nippon Paper Industries Co., Ltd.) (viscosity of 1% aqueous solution: 150-250 mPa·s) (degree of etherification DS ($mol/C_6$): 0.55-0.65) (viscosity as measured with a rotational viscometer at 25°C and 30 rpm (using a rotor as appropriate) for 1 minute)

Soybean polysaccharides: product name SOYAFIBE-S-DN (MS-700) (produced by Fuji oil Co., Ltd.) (viscosity of 10% aqueous solution: 30-40 mPa·s) (viscosity as measured with a rotational viscometer at 25°C and 30 rpm (using a rotor as appropriate) for 1 minute)
Gum ghatti: product name GATIFOLIA RD-SP (produced by San-Ei Gen F.F.I., Inc.) (MW: approximately 800,000 to 1,000,000)
Gum arabic: Quick Gum NRC (EM-10) (produced by San-Ei Gen F.F.I., Inc.)
HM pectin: GENU pectin type JM-150-J (produced by CP Kelco)
LM pectin: GENU pectin type LM-102 AS-J (produced by CP Kelco) Agar: product name Ultra Agar AX-30 (produced by Ina Food Industry Co., Ltd.) (viscosity of 1.5% aqueous solution: 3 mPa·s)
(viscosity as measured with a rotational viscometer at 85°C and 30 rpm (using a rotor as appropriate) for 1 minute)
Lecithin: product name Giralec Premium (produced by Lasenor Emul S.L.)
Medium-chain fatty acid oil (MCT): product name MASESTER E6000 Glycerol Tricaprylate (produced by PT. Musim Mas)
Fructose-glucose liquid sugar: product name Newlacto 55 (isomerized sugar containing 55% or more of fructose) (produced by Showa Sangyo Co., Ltd.)
Dextrin: product name MALTRIN (registered trademark) T100 (DE: 8.0-9.9) (produced by Sansho Co., Ltd.)
McIlvaine buffer (pH of 3.5): prepared by mixing 0.1 mol/L disodium hydrogen phosphate and 0.1 mol/L citric acid and adjusting the mixture to a pH of 3.5.

Experimental Example 1: Acid resistance test of gardenia blue colorant preparation

(1) Production of gardenia blue colorant preparation

Using a powdered gardenia blue colorant (CV300), an aqueous solution of CV30 was prepared. Various polysaccharides shown in Table 1 were added thereto in various amounts and dissolved with stirring. Since the pH of the final aqueous solutions varied depending on the type of polysaccharide used, the pH of all the final aqueous solutions was adjusted to a pH of 6.0 with an aqueous citric acid solution or an aqueous sodium hydroxide solution. Each solution thus adjusted was filtered through a 100-mesh sieve, and the filtrate was homogenized (240 bar, 4 passes) using a benchtop homogenizer (LAB-1000 laboratory pressure homogenizer, produced by SMT Co., Ltd.; the same applies to the Experimental Examples below). The resultant was used as a gardenia blue colorant preparation (CV30) (Example 1 and Comparative Examples 1 to 6). The content of each polysaccharide in the gardenia blue colorant preparation was adjusted to a general concentration at which the final aqueous solution did not gel but was fluid.
Further, as a control, a gardenia blue colorant preparation (CV30, pH of 6) not containing any polysaccharide was prepared.

(2) Acid resistance test method

The prepared gardenia blue colorant preparations (Example 1, Comparative Examples 1 to 6, and Control Example: CV30) were subjected to an acid resistance test.
The acid resistance test was carried out by allowing each gardenia blue colorant preparation to stand at room temperature under acidic conditions overnight (12 hours) and evaluating the presence or absence of aggregates and the degree of aggregation. A sample in which the formation of aggregates was inhibited under acidic conditions was evaluated as "acid-resistant," whereas a sample in which the formation of aggregates was not inhibited was evaluated as "not acid-resistant."
Specifically, 83 μL of each gardenia blue colorant preparation (Example 1, Comparative Examples 1 to 6, Control Example) was aded to 100 mL of a McIlvaine buffer solution (pH of 3.5) contained in a transparent colorless glass vial, and adjusted to a final CV of 0.025. The prepared McIlvaine buffer containing the gardenia blue colorant preparation was allowed to stand at room temperature overnight, and then the presence or absence of aggregates formed in the buffer and the amount of aggregates formed were visually observed from outside the glass vial. The amount (degree) of aggregates formed in a buffer prepared using the gardenia blue colorant preparation of the Control Example was used as an evaluation standard (control), and the presence or absence of acid resistance (presence or absence of the effect of inhibiting aggregate formation under acidic conditions) was evaluated according to the following criteria.

Criteria

A: acid-resistant: No aggregates were observed, or the amount of aggregates formed was smaller than in the control (the presence of aggregates was not visible unless viewed from close to the glass vial).
B: not acid-resistant: The same amount or a greater amount of aggregates were formed than in the control (the presence of aggregates was visible even away from the glass vial).

(3) Results of acid resistance test

Table 1 shows the results.

Table 1

| | Polysaccharides | Content in gardenia blue colorant preparation (CV30) (mass%) | Acid resistance evaluation results |
|---|---|---|---|
| Example 1 | PGA | 1.0% | A |
| Control Example | - | - | B |
| Comp. Ex. 1 | Xanthan gum | 0 . 3 % | B |
| Comp. Ex. 2 | Modified starch | 1 0 % | B |
| Comp. Ex. 3 | Carrageenan | 1 0 % | B |
| Comp. Ex. 4 | Native gellan gum | 0.1 % | B |
| Comp. Ex. 5 | Deacylated gellan gum | 0.1 % | B |
| Comp. Ex. 6 | Sodium alginate (with high viscosity) | 0.5 % | B |

These results confirmed that, among the polysaccharides evaluated, only PGA exhibited the effect of inhibiting aggregation of gardenia blue colorant under acidic conditions and that PGA is a material (polysaccharide) capable of imparting acid resistance to gardenia blue colorant.

Experimental Example 2: Evaluation of acid resistance of gardenia blue colorant preparation in acidic sugar solution

(1) Preparation of an acidic sugar solution containing a gardenia blue colorant preparation

Powdered gardenia blue colorant (CV300) was dissolved in aqueous solutions containing PGA at various concentrations. The resulting solutions were adjusted to a pH of 5.0 with an aqueous citric acid solution or an aqueous sodium hydroxide solution. The adjusted solutions were filtered through a 100-mesh sieve, and the filtrates were individually homogenized using a benchtop homogenizer (240 bar, 4 passes) to prepare clear blue PGA-containing aqueous solutions of gardenia blue colorant (gardenia blue colorant preparations) (CV30). The PGA concentrations in 100 mass% of the gardenia blue colorant preparations (CV30) were 0.01%, 0.02%, 0.05%, 0.1%, 0.3%, 0.5%, 1%, 2%, and 3%.

Each gardenia blue colorant preparation was then mixed with an acidic syrup (pH of 3.5, Brix 10) having the formulation shown in Table 2 below to prepare an acidic syrup containing the gardenia blue colorant preparation (CV 0.025). This acidic syrup was sterilized by heating with an IH heater until it reached 93°C, then cooled to room temperature, and placed in a 100 mL transparent PET screw vial and used as a test solution (CV 0.025, pH of 3.5, Brix 10).

Table 2

| Formulation of acid syrup (pH of 3.5, Brix 10) | |
|---|---|
| Fructose glucose liquid sugar | 13.3 % |
| Anhydrous citric acid | 0.2% |
| Trisodium citrate | Adjusted to a pH of 3.5 |
| Water | Balanced |
| Total | 100.0% |

(2) Method for evaluating acid resistance

The acid resistance of the test solutions prepared above was evaluated. The evaluation was carried out by preparing test solutions, then allowing the test solutions to stand in a cool dark place (5°C) for 3 hours and for 1 week, and then measuring the absorbance of the test solutions at the maximum absorption wavelength (λmax: 590-600 nm region) and at an absorption wavelength of 720 nm. The test solutions before filtration (unfiltered solutions) and those after 0.2 μm filtration (i.e., after filtration through a cellulose acetate cartridge filter with a pore size of 0.2 μm; the same applies to the Examples below) were subjected to absorbance measurements at the maximum absorption wavelength. The residual ratio (%) of gardenia blue colorant in the test solution after filtration was calculated from the ratio of absorbance after filtration to absorbance before filtration, as shown in the following formula.

Residual ratio (%) of gardenia blue colorant in the test solution after filtration = Absorbance of the test solution after filtration (λmax) / Absorbance of the test solution before filtration (λmax)) × 100          Formula

(3) Evaluation results

Since the test solution containing 3% PGA had a high viscosity and could not be filtered, the solution was not subjected to acid resistance evaluation. Table 3 shows the results of the test solutions other than this solution.

Table 3

|  | After 3 hours | | | | | | |
|---|---|---|---|---|---|---|---|
|  | Ex. 2-1 | Ex. 2-2 | Ex. 2-3 | Ex. 2-4 | Ex. 2-5 | Ex. 2-6 | Ex. 2-7 |
| PGA concentration/CV30 | 0.01% | 0.05% | 0.10% | 0.30% | 0.50% | 1.00% | 2.00% |
| Absorbance (Abs) before filtration | 0.2067 | 0.2066 | 0.2062 | 0.2015 | 0.2001 | 0.2462 | 0.2568 |
| Absorbance after 0.2 μm filtration | 0.1231 | 0.1239 | 0.1453 | 0.1938 | 0.1915 | 0.2093 | 0.2105 |
| Residual ratio (%) after 0.2 μm filtration (Absorbance after 0.2 μm filtration / Absorbance before filtration) × 100 | 60% | 60% | 70% | 96% | 96% | 85% | 82% |
| Absorbance at 720 nm (turbidity) | 0.0283 | 0.0270 | 0.0240 | 0.0213 | 0.0191 | 0.0307 | 0.0406 |

|  | After 1 week | | | | | | |
|---|---|---|---|---|---|---|---|
|  | Ex. 2-1 | Ex. 2-2 | Ex. 2-3 | Ex. 2-4 | Ex. 2-5 | Ex. 2-6 | Ex. 2-7 |
| PGA concentration/CV30 | 0.01% | 0.05% | 0.10% | 0.30% | 0.50% | 1.00% | 2.00% |
| Absorbance before filtration | 0.2106 | 0.2168 | 0.2138 | 0.2187 | 0.2160 | 0.2461 | 0.2470 |
| Absorbance after 0.2 μm filtration | 0.1441 | 0.1443 | 0.1489 | 0.2039 | 0.2045 | 0.2002 | 0.2042 |
| Residual ratio (%) after 0.2 μm filtration (Absorbance after 0.2 μm filtration/Absorbance before filtration) × 100 | 68% | 67% | 70% | 93% | 95% | 81% | 83% |
| 720 nm absorbance (turbidity) | 0.0362 | 0.0349 | 0.0290 | 0.0274 | 0.0243 | 0.0432 | 0.0483 |

As shown in the results, when the PGA content of the gardenia blue colorant preparation (CV30) is 0.1% or less, the residual ratio (%) of gardenia blue colorant decreases; that is, the gardenia blue colorant aggregates and becomes insoluble under acidic conditions. These results show that gardenia blue colorant preparations containing 0.2% or more of PGA, preferably containing 0.3% or more of PGA, per color value of 30 of the gardenia blue colorant, inhibit the formation of insoluble matter (aggregates) in acidic syrup (pH of 3.5) with a Brix of 10% over time.

Experimental Example 3: Evaluation of acid resistance-imparting effect of various polysaccharides on gardenia blue colorant preparations

(1) Preparation of Gardenia Blue Colorant Preparation

Gardenia blue colorant preparations containing various polysaccharides in specific ratios were prepared by the following method (see Table 4).

Preparation of Gardenia Blue Pre-emulsion

1. (C) g of ion-exchanged water and 40.0 g of propylene glycol (PG) are weighed out in a 1000 mL stainless steel container.

2. The container is placed in a warm-water bath set at (D)°C, and the aqueous PG solution in the container is stirred with a Homo Disper (ROBO MICS, produced by Primix Corporation; the same applies to the Experimental Examples below).

3. (B) g of each polysaccharide (A) is weighed out and gradually added to the aqueous PG solution with stirring and further stirred at (D)°C and 2000 rpm for 10 minutes to dissolve the polysaccharide (A).

4. While this solution is stirred at room temperature (20±15°C) and 2000 rpm, 47.4 g of a gardenia blue colorant concentrate is added to the solution and the resulting mixture is stirred for 5 minutes to obtain a pre-emulsion.

5. The pre-emulsion is allowed to stand at room temperature (20±15°C) for at least 1 hour to remove bubbles.

The emulsions thus obtained are used as Gardenia blue pre-emulsions (test sections 1 to 3).

Table 4

| (A) | (B) | | | (C) | | | (D) |
|---|---|---|---|---|---|---|---|
| Polysaccharides | Test section 1 | Test section 2 | Test section 3 | Test section 1 | Test section 2 | Test section 3 | Melting temperature |
| | Sugar content 1 | Sugar content 2 | Sugar content 3 | Water content 1 | Water content 2 | Water content 3 | |
| PGA | 0.4 g | 2.0 g | 4.0 g | 312.2 | 310.6 | 308.6 | 80°C |
| CMC | 4.0 g | 8.0 g | 20.0 g | 308.6 | 304.6 | 292.6 | |
| Gum ghatti | 4.0 g | 12.0 g | 20.0 g | 308.6 | 300.6 | 292.6 | |
| Gum arabic | 40.0 g | 80.0 g | 120.0 g | 272.6 | 232.6 | 192.6 | |
| Soybean polysaccharides | 20.0 g | 40.0 g | 80.0 g | 292.6 | 272.6 | 232.6 | |
| HM pectin | 0.8 g | 4.0 g | 8.0 g | 311.8 | 308.6 | 304.6 | |
| LM pectin | 0.8 g | 4.0 g | 8.0 g | 311.8 | 308.6 | 304.6 | |
| Xanthan gum | 0.04 g | 0.2 g | 0.4 g | 312.56 | 312.4 | 312.2 | |
| Agar | 0.4 g | 0.8 g | 4.0 g | 312.2 | 311.8 | 308.6 | |
| Sodium alginate (low viscosity) | 8.0 g | 20.0 g | 40.0 g | 304.6 | 292.6 | 272.6 | |
| Sodium alginate (high viscosity) | 0.4 g | 2.0 g | 4.0 g | 312.2 | 310.6 | 308.6 | |
| Agar | 0.4 g | 0.8 g | 4.0 9 | 312.2 | 311.8 | 308.6 | 90°C |

Preparation of Gardenia Blue Colorant Preparation

1. The gardenia blue preliminary emulsions (test sections 1 to 3) prepared above are placed in the hopper of a benchtop homogenizer.

2. After performing an initial flow discharge (equivalent to 5 pushes), the pressure is adjusted to 50 bar for the first stage and 350 bar for the second stage to allow the gardenia blue pre-emulsion to pass through the inside of the homogenizer under pressure.

3. The gardenia blue emulsion discharged by being allowed to pass through the inside of the homogenizer under pressure is returned to the hopper and allowed to pass through the inside under a pressure of 350 bar 4 times (i.e., repeatedly) (main emulsification).

Each gardenia blue emulsion thus prepared was used as a gardenia blue colorant preparation (CV30) in the experiments below.

(2) Viscosity Measurement

The viscosity of each gardenia blue colorant preparation prepared above was measured at 25°C using a viscometer (TVB-10 viscometer: model TVB-10M, produced by Toki Sangyo Co., Ltd.).
Table 5 shows the results.

Table 5

| Polysaccharides | Test section | Rotor | Rotational speed (rpm) | Viscosity (mPa·S) |
|---|---|---|---|---|
| PGA | 0.1% | M1 | 60 | 5.0 |
| | 0.5% | M1 | 60 | 11.1 |
| | 1.0% | M1 | 60 | 33.9 |
| CMC | 1% | M1 | 60 | 76.6 |
| | 2% | M3 | 6 | 17420.0 |
| | 5% | (gelled) | | |
| Gum ghatti | 1% | M1 | 60 | 5.1 |
| | 3% | M1 | 60 | 7.2 |
| | 5% | M1 | 60 | 17.5 |
| Gum arabic | 10% | M1 | 60 | 27.6 |
| | 20% | M1 | 30 | 189.0 |
| | 30% | M2 | 12 | 1310.0 |
| Soybean polysaccharides | 5% | M1 | 60 | 15.7 |
| | 10% | M1 | 60 | 71.8 |
| | 20% | M2 | 12 | 1608.0 |
| HM pectin | 0.2% | M1 | 60 | 5.3 |
| | 1.0% | M1 | 6 | 530.0 |
| | 2.0% | M2 | 30 | 571.0 |
| LM pectin | 0.2% | M1 | 60 | 5.4 |
| | 1.0% | M1 | 60 | 24.8 |
| | 2.0% | M1 | 30 | 101.9 |
| Xanthan gum | 0.01% | M1 | 60 | 4.9 |
| | 0.05% | M1 | 60 | 5.6 |
| | 0.10% | M1 | 60 | 7.5 |
| Agar | 0.1% | M1 | 60 | 6.3 |
| | 0.2% | M1 | 60 | 14.0 |
| | 1.0% | (gelled) | | |
| Sodium alginate (low viscosity) | 2% | M1 | 60 | 10.8 |
| | 5% | M1 | 60 | 64.2 |
| | 10% | (gelled) | | |
| Sodium alginate (high viscosity) | 0.1% | M1 | 60 | 5.9 |
| | 0.5% | M1 | 60 | 12.3 |
| | 1.0% | M1 | 60 | 44.1 |

(3) Preparation of Test Solutions

Acidic aqueous solutions 1 to 3 having the formulations shown in Table 6 (Brix 0, 30, 60; pH of 3.5) were prepared and placed in stainless steel containers.

Table 6

| | Acidic aqueous solution 1 | Acidic aqueous solution 2 | Acidic aqueous solution 1 |
|---|---|---|---|
| | Brix 0 | Brix 30 | Brix 60 |
| Fructose glucose liquid sugar | 0 g | 400 g | 800 g |
| Anhydrous citric acid | 2 g | 2g | 2g |
| Trisodium Citrate | Adjusted to a pH of 3.5 | Adjusted to a pH of 3.5 | Adjusted to a pH of 3.5 |
| Water | 998 g | 598 g | 198 g |
| Total amount | 1000 g | 1000 g | 1000 g |

The gardenia blue colorant preparation (CV30) prepared above was added to each of the above acidic aqueous solutions 1 to 3 to prepare aqueous solutions containing the acidic gardenia blue colorant (Brix 0, 30, 60; pH of 3.5). Subsequently, for sterilization, the mixture was heated to 93°C using an IH heater, cooled to room temperature, and then the weight was corrected with ion-exchanged water so that the gardenia blue colorant concentration was equivalent to CV0.024. This solution was placed in a 50 mL transparent PET screw vial and used as a test solution.

(4) Method for Evaluating Acid Resistance

The test solutions prepared above (Brix 0, 30, 60; pH of 3.5, equivalent to CV 0.024) were evaluated for acid resistance of gardenia blue colorant.
Tables 7 to 9 show the concentrations of polysaccharides in the gardenia blue colorant preparation (CV30) used to prepare the test solutions and the maximum absorption wavelengths ($\lambda$max) of the test solutions.
The evaluation was carried out by allowing each test solution to stand in a cool dark place (5°C) for 3 months and then measuring the maximum absorption wavelength ($\lambda$max) and the absorbance at an absorption wavelength of 720 nm of the test solution. The absorbance measurements at the maximum absorption wavelength were performed in the same manner as in Experimental Example 2. Specifically, the test solutions immediately after preparation and before filtration treatment (unfiltered solutions), and those after being allowed to stand for 3 months and then being subjected to 0.2 $\mu$m filtration, were subjected to absorbance measurement. The residual ratio (%) of gardenia blue colorant in each test solution after filtration was calculated from the ratio of absorbance before filtration to absorbance after filtration.

(5) Evaluation Results

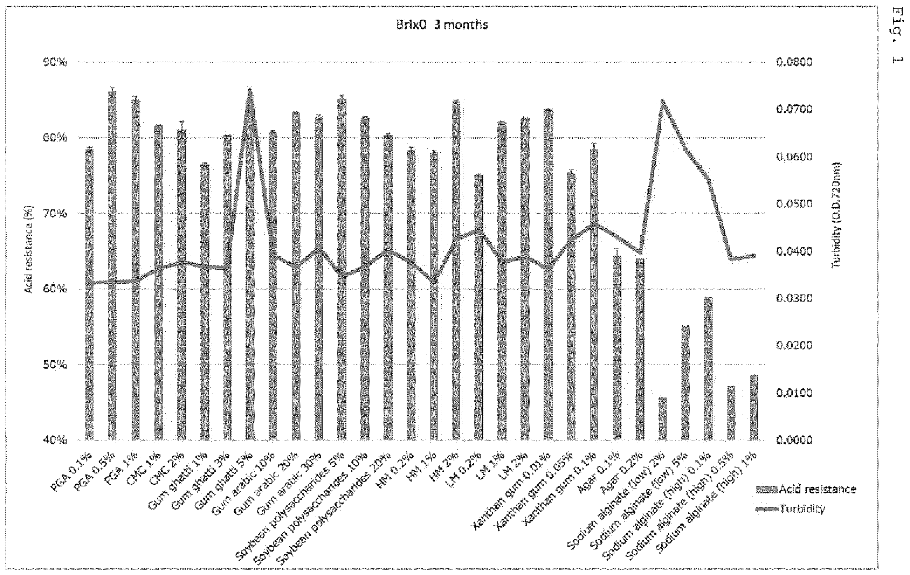

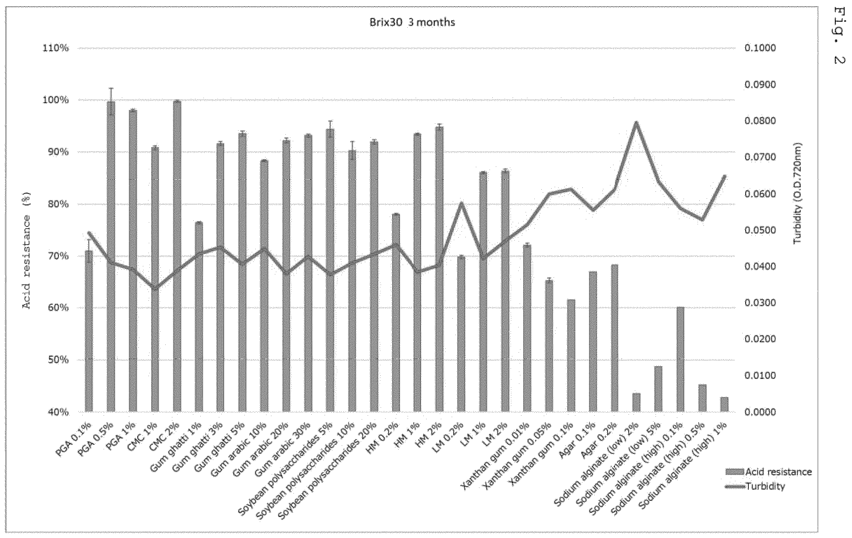

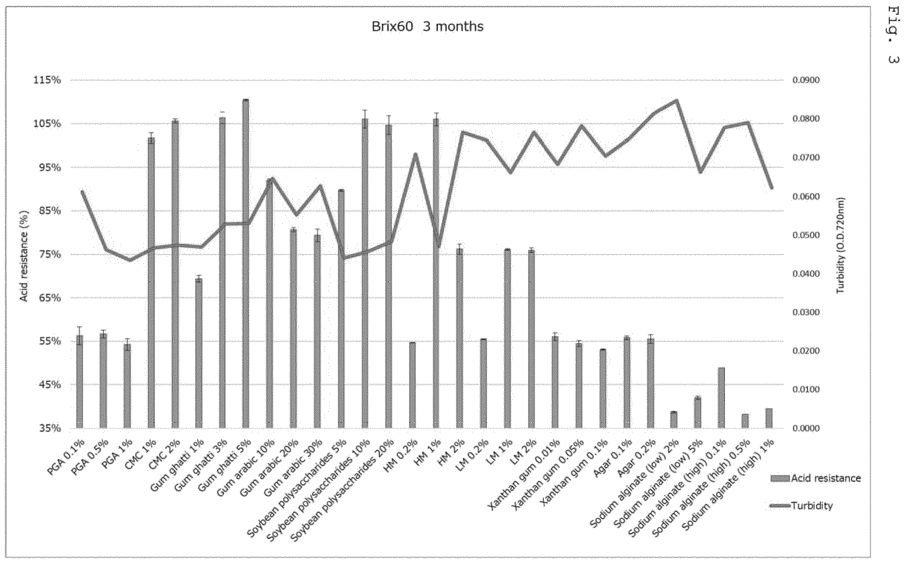

Table 7 and Fig. 1 show evaluation results of test solutions (Brix of 0, pH of 3.5). Table 8 and Fig. 2 show evaluation results of test solutions (Brix of 30, pH of 3.5). Table 9 and Fig. 3 show evaluation results of test solutions (Brix of 60, pH of 3.5).

Table 7

| Evaluation results of test solutions (Brix 0, pH of 3.5) | | | | |
|---|---|---|---|---|
| Polysaccharides | Polysaccharide concentration/ CV30* | $\lambda$max | Residual ratio (%) after 0.2 $\mu$m filtration | Absorbance at 720 nm (turbidity) |
| PGA | 0.1% | 600.0 | 78% | 0.0333 |
| | 0.5% | 600.0 | 86% | 0.0334 |
| | 1.0% | 600.0 | 85% | 0.0338 |
| CMC | 1% | 600.0 | 82% | 0.0363 |
| | 2% | 600.5 | 81% | 0.0377 |
| | 5% | Not measurable due to gelation | | |

(continued)

| Evaluation results of test solutions (Brix 0, pH of 3.5) | | | | |
| --- | --- | --- | --- | --- |
| Polysaccharides | Polysaccharide concentration/ CV30* | λmax | Residual ratio (%) after 0.2 μm filtration | Absorbance at 720 nm (turbidity) |
| Gum ghatti | 1% | 600.0 | 76% | 0.0367 |
| | 3% | 599.5 | 80% | 0.0364 |
| | 5% | 599.0 | 85% | 0.0742 |
| Gum arabic | 10% | 600.0 | 81% | 0.0393 |
| | 20% | 599.5 | 83% | 0.0367 |
| | 30% | 602.0 | 83% | 0.0407 |
| Soybean polysaccharides | 5% | 600.0 | 85% | 0.0346 |
| | 10% | 600.0 | 83% | 0.0369 |
| | 20% | 600.0 | 80% | 0.0403 |
| HM pectin | 0.2% | 600.0 | 78% | 0.0377 |
| | 1.0% | 600.0 | 78% | 0.0334 |
| | 2.0% | 600.0 | 85% | 0.0425 |
| LM pectin | 0.2% | 600.0 | 75% | 0.0446 |
| | 1.0% | 600.0 | 82% | 0.0378 |
| | 2.0% | 600.0 | 83% | 0.0389 |
| Xanthan gum | 0.01% | 599.5 | 84% | 0.0362 |
| | 0.05% | 599.0 | 75% | 0.0424 |
| | 0.10% | 600.0 | 78% | 0.0458 |
| Agar | 0.1% | 599.5 | 64% | 0.0431 |
| | 0.2% | 599.5 | 64% | 0.0396 |
| | 1.0% | Not measurable due to gelation | | |
| Sodium alginate (low viscosity) | 2% | 599.5 | 46% | 0.0719 |
| | 5% | 599.5 | 55% | 0.0616 |
| | 10% | Not measurable due to gelation | | |
| Sodium alginate (high viscosity) | 0.1% | 599.5 | 59% | 0.0553 |
| | 0.5% | 599.5 | 47% | 0.0383 |
| | 1.0% | 599.5 | 49% | 0.0391 |
| *Polysaccharide concentration in gardenia blue colorant preparation (CV30) | | | | |

Among the 11 types of polysaccharides, PGA (0.1%/CV30), gum ghatti (1%/CV30), HM pectin (1% or less/CV30), LM pectin (0.2%/CV30), xanthan gum, agar, and sodium alginate (low-viscosity sodium alginate, high-viscosity sodium alginate) were less effective in inhibiting aggregation (insolubilization) of gardenia blue colorant in the acidic aqueous solution, and little effect of imparting acid resistance to gardenia blue colorant was observed.

Table 8

| Evaluation results of test solutions (Brix 30, pH of 3.5) | | | | |
|---|---|---|---|---|
| Polysaccharides | Polysaccharide concentration/ CV30* | λmax | Residual ratio (%) after 0.2 μm filtration | 720 nm absorbance (turbidity) |
| PGA | 0.1% | 600.0 | 71% | 0.0493 |
| | 0.5% | 600.0 | 100% | 0.0412 |
| | 1.0% | 600.0 | 98% | 0.0392 |
| CMC | 1% | 600.0 | 91% | 0.0338 |
| | 2% | 600.5 | 100% | 0.0388 |
| | 5% | Not measurable due to gelation | | |
| Gum ghatti | 1% | 600.0 | 76% | 0.0436 |
| | 3% | 599.5 | 92% | 0.0454 |
| | 5% | 599.0 | 94% | 0.0407 |
| Gum arabic | 10% | 600.0 | 88% | 0.0450 |
| | 20% | 599.5 | 92% | 0.0380 |
| | 30% | 602.0 | 93% | 0.0428 |
| Soybean polysaccharides | 5% | 600.0 | 94% | 0.0378 |
| | 10% | 600.0 | 90% | 0.0410 |
| | 20% | 600.0 | 92% | 0.0434 |
| HM pectin | 0.2% | 600.0 | 78% | 0.0460 |
| | 1.0% | 600.0 | 93% | 0.0385 |
| | 2.0% | 600.0 | 95% | 0.0404 |
| LM pectin | 0.2% | 600.0 | 70% | 0.0574 |
| | 1.0% | 600.0 | 86% | 0.0422 |
| | 2.0% | 600.0 | 86% | 0.0470 |
| Xanthan gum | 0.01% | 599.5 | 72% | 0.0516 |
| | 0.05% | 599.0 | 65% | 0.0599 |
| | 0.10% | 600.0 | 62% | 0.0613 |
| Agar | 0.1% | 599.5 | 67% | 0.0555 |
| | 0.2% | 599.5 | 68% | 0.0613 |
| | 1.0% | Not measurable due to gelation | | |
| Sodium alginate (low viscosity) | 2% | 599.5 | 44% | 0.0795 |
| | 5% | 599.5 | 49% | 0.0633 |
| | 10% | Not measurable due to gelation | | |
| Sodium alginate (high viscosity) | 0.1% | 599.5 | 60% | 0.0560 |
| | 0.5% | 599.5 | 45% | 0.0528 |
| | 1.0% | 599.5 | 43% | 0.0648 |
| *Polysaccharide concentration in gardenia blue colorant preparation (CV30) | | | | |

Table 9

| Evaluation results of test solutions (Brix 60, pH of 3.5) | | | | |
|---|---|---|---|---|
| Polysaccharides | Polysaccharide concentration/ CV30* | λmax | Residual ratio (%) after 0.2 μm filtration | Absorbance at 720 nm (turbidity) |
| PGA | 0.1% | 600.0 | 56% | 0.0611 |
| | 0.5% | 600.0 | 57% | 0.0462 |
| | 1.0% | 600.0 | 54% | 0.0434 |
| CMC | 1% | 600.0 | 102% | 0.0467 |
| | 2% | 600.5 | 106% | 0.0474 |
| | 5% | Not measurable due to gelation | | |
| Gum ghatti | 1% | 600.0 | 69% | 0.0469 |
| | 3% | 599.5 | 106% | 0.0529 |
| | 5% | 599.0 | 110% | 0.0529 |
| Gum arabic | 10% | 600.0 | 92% | 0.0646 |
| | 20% | 599.5 | 81% | 0.0553 |
| | 30% | 602.0 | 79% | 0.0627 |
| Soybean polysaccharides | 5% | 600.0 | 90% | 0.0441 |
| | 10% | 600.0 | 106% | 0.0457 |
| | 20% | 600.0 | 105% | 0.0483 |
| HM pectin | 0.2% | 600.0 | 55% | 0.0709 |
| | 1.0% | 600.0 | 106% | 0.0470 |
| | 2.0% | 600.0 | 76% | 0.0766 |
| LM pectin | 0.2% | 600.0 | 55% | 0.0744 |
| | 1.0% | 600.0 | 76% | 0.0662 |
| | 2.0% | 600.0 | 76% | 0.0765 |
| Xanthan gum | 0.01% | 599.5 | 56% | 0.0683 |
| | 0.05% | 599.0 | 54% | 0.0782 |
| | 0.10% | 600.0 | 53% | 0.0704 |
| Agar | 0.1% | 599.5 | 56% | 0.0750 |
| | 0.2% | 599.5 | 55% | 0.0812 |
| | 1.0% | Not measurable due to gelation | | |
| Sodium alginate (low viscosity) | 2% | 599.5 | 39% | 0.0848 |
| | 5% | 599.5 | 42% | 0.0663 |
| | 10% | Not measurable due to gelation | | |
| Sodium alginate (high viscosity) | 0.1% | 599.5 | 49% | 0.0777 |
| | 0.5% | 599.5 | 38% | 0.0790 |
| | 1.0% | 599.5 | 39% | 0.0623 |
| *Polysaccharide concentration in gardenia blue colorant preparation (CV30) | | | | |

The results in Tables 8 and 9 show that with an increase in Brix of a test solution, the effect of imparting acid resistance to gardenia blue colorant is reduced; this tendency was observed not only when PGA (0.1%/CV30), gum ghatti (1%/CV30), HM pectin (1% or less/CV30), LM pectin (0.2%/CV30), xanthan gum, agar, or sodium alginate (a low viscosity, a high viscosity) was used but also when PGA (0.5%/CV30, 1.0%/CV30), gum ghatti(1%/CV30), HM pectin (2%/CV30), or LM pectin (1%/CV30, 2%/CV30) was used. Further, it was observed that the effect of imparting acid resistance to gardenia blue colorant by using gum arabic also tends to decrease.

The above results show that CMC (1-2%/CV30), gum ghatti (3-5%/CV30), and soybean polysaccharides (5-20%/CV30) have the effect of imparting acid resistance (aggregation inhibition) to gardenia blue colorant in acidic aqueous solutions (Brix 0-60%). These results revealed that using such a polysaccharide in combination with gardenia blue colorant can inhibit formation of aggregates of gardenia blue colorant in acidic aqueous solutions having a wide range of Brix of 0 to 60%.

Further, the results of the viscosity measurements of the gardenia blue colorant preparations confirmed that aggregate formation inhibition effects of the polysaccharides on gardenia blue colorant are unrelated to thickening action of the polysaccharides.

Experimental Example 4: Anti-foaming test of acid-resistant gardenia blue preparation - part 1

(1) Preparation of test samples

The gardenia blue colorant preparation (CV30, PGA concentration: 1.0%/CV30) that was prepared in Experimental Example 1 and whose acid resistance was confirmed (Example 1: acid-resistant gardenia blue preparation) was added to an acidic sugar solution (acid syrup: pH of 2.3, Brix 60) having the formulation shown in Table 10 to prepare a colored acid syrup (CV0.3).

Table 10

| Syrup formulation (pH of 2.3, Brix 60) | |
|---|---|
| Fructose glucose liquid sugar | 79.0 % |
| Anhydrous citric acid | 1.3 % |
| Trisodium citrate | 0.1 % |
| Water | 19.6 % |
| Total weight | 100.0 % |

The defoaming components shown in Table 11 were individually added to the colored acidic syrup (pH of 2.3, Brix 60, CV0.3) to a final concentration of 0.005%. Each of the resulting mixtures was gently mixed to prepare colored acidic syrups containing the defoaming component (test samples: Examples 3-1 to 3-3). As a control, a colored acidic syrup (pH of 2.3, Brix 60, CV0.3) not containing any defoaming component was used (Control Example).

(2) Evaluation of anti-foaming effect of defoaming component

50 mL of the test samples (Examples 3-1 to 3-3 and Control Example) prepared above were individually placed in 100 mL transparent glass beakers, and stirred with a Homo Disper (3000 rpm, 5 minutes). The amount of bubbles immediately after stirring and the amount of bubbles after allowing each test sample to stand for 10 minutes at room temperature were measured.

The result of the test sample in which the largest amount of bubbles was formed (Control Example) was defined as "x (no effect)," and anti-foaming effects of the defoaming components incorporated into test samples (Examples 3-1 to 3-3) were evaluated according to the following criteria.

Anti-foaming effect

A: High anti-foaming effects: almost no foaming is observed.
B: Anti-foaming effects: although bubbles are observed on the liquid surface, the degree of foaming is less than that in the Control Example.
C: No anti-foaming effects: the same degree of foaming as in the Control Example is observed.

(3) Evaluation results

Table 11 shows the results.

Table 11

| Test sample | Defoaming component | Anti-foaming effect | |
|---|---|---|---|
| | | Immediately after stirring | After being allowed to stand for 10 minutes |
| Example 3-1 | Lecithin | B | B |
| Example 3-2 | MCT | B | B |
| Example 3-3 | Lecithin + MCT (mass ratio 5 : 5 ) | A | A |

The test sample colored with a gardenia blue colorant preparation containing PGA (acid-resistant gardenia blue preparation) (Control Example) was prone to foam and the bubbles generated did not easily disappear but persisted over time. In contrast, it was confirmed that when lecithin or MCT, or both, are added to the acid-resistant gardenia blue preparation, foaming can be inhibited immediately after stirring, and the inhibition can be stably continued even after the preparation is allowed to stand. That is, it was found that both lecithin and MCT have good anti-foaming effects on acidic syrup containing the acid-resistant gardenia blue preparation. The results further confirmed that a combination of lecithin and MCT further improves the anti-foaming effect.

Experimental Example 5: Anti-foaming test of acid-resistant gardenia blue preparation - part 2

Gardenia blue colorant preparations (acid-resistant gardenia blue preparations) containing polysaccharides (PGA, CMC, guar gum, gum arabic, and soybean polysaccharides) whose effect of imparting acid resistance to gardenia blue colorant was confirmed in Experimental Example 3 were subjected to the following evaluation.

(A) Anti-foaming effect of defoaming component on acid-resistant gardenia blue preparation
(B) Acid resistance of acid-resistant gardenia blue preparation containing a defoaming component

As the defoaming component, an equivalent mixture of lecithin and MCT (mass ratio 5:5) whose anti-foaming effect was confirmed in Experimental Example 4 was used.

(1) Preparation of acid-resistant gardenia blue preparation containing a defoaming component (acid-resistant anti-foaming gardenia blue reparation)

Emulsions containing various polysaccharides and defoaming components were prepared by the following method (see Table 12).

Preparation of Emulsion

1. (C) g of ion-exchanged water and 40.0 g of propylene glycol are weighed out in a 1,000 mL stainless steel container.
2. The container is placed in a warm-water bath set at (D)°C and the PG-containing aqueous solution in the container is stirred with a Homo Disper.
3. (B) g of each polysaccharide (A) is added little by little to the PG-containing aqueous solution with stirring and is dissolved by stirring at 80°C and 2000 rpm for 10 minutes.
4. 47.4 g of a gardenia blue colorant concentrate is added to the solution with stirring at 2000 rpm at room temperature (20±15°C).
5. While stirring at 2000 rpm, the defoaming components (2 g of lecithin and 2 g of MCT) are added, and the resulting mixture is stirred for 10 minutes to obtain a pre-emulsion (gardenia blue pre-emulsion).
6. The gardenia blue pre-emulsion is placed in the hopper of a benchtop homogenizer and passed through the inside of the homogenizer at a pressure of 350 bar 4 times (i.e., repeatedly) (passing 4 times under pressure) to obtain an emulsion (gardenia blue emulsion).
7. The gardenia blue emulsion is passed through a 150-mesh filter and collected in a 250 mL wide-mouth container made of PE.

The gardenia blue emulsion thus prepared was used as an anti-foaming acid-resistant gardenia blue preparation in the experiments below.

Table 12

| (A) | (B) | | | (C) | | |
|---|---|---|---|---|---|---|
| Polysaccharides | Test section 1 | Test section 2 | Test section 3 | Test section 1 | Test section 2 | Test section 3 |
| | Sugar content 1 | Sugar content 2 | Sugar content 3 | Water content 1 | Water content 2 | Water content 3 |
| PGA | 0.4 g | 2.0 g | 4.0 g | 312.2 | 310.6 | 308.6 |
| CMC | 4.0 g | 8.0 g | 20.0 g | 308.6 | 304.6 | |
| Gum ghatti | 4.0 g | 12.0 g | 20.0 g | 308.6 | 300.6 | 292.6 |
| Gum arabic | 40.0 g | 80.0 g | 120.0 g | 272.6 | 232.6 | 192.6 |
| HM pectin | 0.8 g | 4.0 g | 8.0 g | 311.8 | 308.6 | 304.6 |
| LM pectin | 0.8 g | 4.0 g | 8.0 g | 311.8 | 308.6 | 304.6 |
| Soybean polysaccharides | 20.0 g | 40.0 g | 80.0 g | 292.6 | 272.6 | 232.6 |

(2) Preparation of test solutions

An acidic aqueous solution (Brix 0) having the formulation shown in Table 13 was prepared in a stainless steel container.

Table 13

| | Brix 0 |
|---|---|
| Fructose glucose liquid sugar | 0 g |
| Citric anhydride | 2 g |
| Trisodium citrate | Adjusted to a pH of 3.5 |
| Water | 998 g |
| Total weight | 1000 g |

The anti-foaming acid-resistant gardenia blue preparation prepared in (1) was added to the acidic aqueous solution (Brix 0, pH of 3.5). Subsequently, for sterilization, the resulting mixture was heated to 93°C with an IH heater and cooled to room temperature, and then the weight was corrected with ion-exchanged water. The resulting mixture was placed in a 50 mL transparent screw vial made of PET. This was used as a test solution (Brix 0, pH of 3.5).

(A) Evaluation of anti-foaming effect

The test solution (pH of 3.5, Brix 0) prepared above was evaluated for anti-foaming properties in the same manner as described in Experimental Example 4(2). A test solution (pH of 3.5, Brix 0) prepared in the same manner as above except that an acid-resistant gardenia blue preparation containing no defoaming component was used in place of the anti-foaming acid-resistant gardenia blue preparation was used as a reference solution with a rating of "C: having no anti-foaming effect" (Control Example).

In the same manner as in Experimental Example 4 (2), the test solution was placed in a transparent glass beaker and stirred with a Homo Disper, and anti-foaming effects of each defoaming component were evaluated from the amounts of bubbles generated immediately after stirring and bubbles after being allowed to stand at room temperature for 10 minutes. Table 14 shows the results.

Table 14

| Polysaccharides | Polysaccharide concentration/CV30* | Foam-inhibiting effect | |
|---|---|---|---|
| | | Immediately after stirring | After being allowed to stand for 10 minutes |
| PGA | 0.1% | A | A |
| | 0.5% | A | A |
| | 1.0% | A | A |
| CMC | 1% | A | A |
| | 2% | A | A |
| Gum ghatti | 1% | A | A |
| | 3% | A | A |
| | 5% | A | A |
| Gum arabic | 10% | A | A |
| | 20% | A | A |
| | 30% | A | A |
| Soybean polysaccharides | 5% | A | A |
| | 10% | A | A |
| | 20% | A | A |
| * Polysaccharide concentration in acid-resistant gardenia blue preparation (CV30) | | | |

These results confirmed that the defoaming components whose anti-foaming effects was confirmed in Experimental Example 4 exhibited anti-foaming effects on any of the gardenia blue colorant preparations containing polysaccharides shown in Table 14 (anti-foaming acid-resistant gardenia blue preparations).

(B) Acid resistance of anti-foaming acid-resistant gardenia blue preparations containing defoaming components

(1) Method for evaluating the acid resistance of test solutions

The acid resistance of each test solution (pH 3.5, Brix 0) prepared above was evaluated.
The evaluation was carried out by measuring the absorbance of each test solution at the maximum absorption wavelength (590-600 nm region) and at an absorption wavelength of 720 nm immediately after preparation. The absorbance measurement at the maximum absorption of each test solution was performed in the same manner as in Experimental Example 2. Specifically, the absorbance of each test solution before filtration (unfiltered) and the absorbance of the test solution after 0.2 μm filtration were measured. The residual ratio (%) of gardenia blue colorant in the test solution after filtration was calculated from the ratio of absorbance before filtration to absorbance after filtration.

(2) Evaluation results

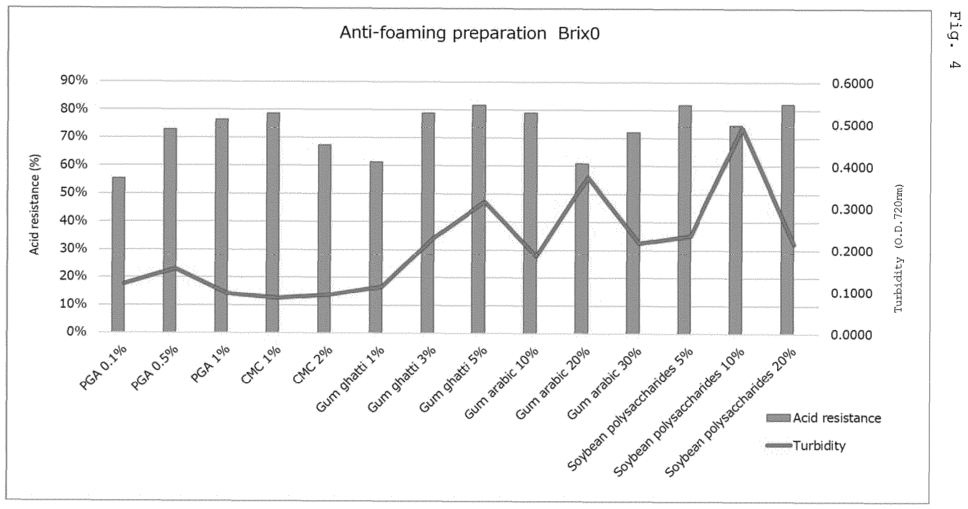

Table 15 and Fig. 4 show the acid resistance evaluation results of the test solutions.

Table 15

| Evaluation results of test solutions (Brix 0) | | | |
|---|---|---|---|
| Polysaccharides | Polysaccharide concentration/CV30* | Residual (%) after 0.2 μm filtration | Absorbance at 720 nm (turbidity) |
| PGA | 0.1% | 55.2% | 0.1180 |
| | 0.5% | 72.8% | 0.1531 |
| | 1.0% | 76.3% | 0.0937 |

(continued)

| Evaluation results of test solutions (Brix 0) | | | |
|---|---|---|---|
| Polysaccharides | Polysaccharide concentration/CV30* | Residual (%) after 0.2 μm filtration | Absorbance at 720 nm (turbidity) |
| CMC | 1% | 78.7% | 0.0833 |
| | 2% | 67.3% | 0.0915 |
| Gum ghatti | 1% | 61.4% | 0.1102 |
| | 3% | 78.9% | 0.2282 |
| | 5% | 81.7% | 0.3149 |
| Gum arabic | 10% | 79.1% | 0.1852 |
| | 20% | 60.8% | 0.3741 |
| | 30% | 71.9% | 0.2164 |
| Soybean polysaccharides | 5% | 81.9% | 0.2343 |
| | 10% | 74.7% | 0.4915 |
| | 20% | 82.1% | 0.2159 |
| * Polysaccharide concentration in acid-resistant gardenia blue preparation (CV30) | | | |

The results confirmed that these polysaccharides exhibit the effect of inhibiting aggregation of gardenia blue colorant in an acidic aqueous solution (effect of imparting acid resistance) even in the presence of a defoaming component. However, the results also showed that when gum ghatti, gum arabic, or soybean polysaccharides were used as polysaccharides, the absorbance (turbidity) at 720 nm tended to increase. Accordingly, when an anti-foaming acid-resistant acidic aqueous solution with clarity containing gardenia blue colorant (e.g., an acidic beverage colored with gardenia blue colorant) is to be prepared, it is considered preferable to use PGA or CMC as a polysaccharides having the effect of imparting acid resistance.

**Claims**

1. An acid-resistant gardenia blue preparation comprising:

   (A) gardenia blue colorant; and
   (B) at least one member selected from the group consisting of propylene glycol alginate, carboxymethylcellulose, salts of carboxymethylcellulose, and soybean polysaccharides,

   wherein the proportion of each component (B) per color value of 30 of the gardenia blue colorant is as follows:

   (1) propylene glycol alginate: 0.2 to 3 mass%;
   (2) carboxymethylcellulose: 0.5 to 2 mass%;
   (3) soybean polysaccharides: 5-20 mass%.

2. The acid-resistant gardenia blue preparation according to claim 1, further comprising at least one member selected from the group consisting of lecithin and medium-chain fatty acid oils.

3. The acid-resistant gardenia blue preparation according to claim 2, wherein component (B) is at least one member selected from the group consisting of propylene glycol alginate, carboxymethylcellulose, and salts of carboxymethylcellulose.

4. The acid-resistant gardenia blue preparation according to claim 1 or 2, which is in the form of a powder.

5. A colored composition comprising the acid-resistant gardenia blue preparation of any one of claims 1 to 4.

**EP 4 609 724 A1**

6. The colored composition according to claim 5, which is an acidic composition.

7. The colored composition according to claim 5 or 6, which is an acidic sugar solution having a Brix of 20 to 80.

8. The colored composition according to claim 5 or 6, which is a carbonated beverage.

9. A method for imparting acid resistance to gardenia blue colorant to inhibit aggregation under acidic conditions, the method comprising
allowing (A) gardenia blue colorant to be present with (B) at least one member selected from the group consisting of propylene glycol alginate, carboxymethylcellulose, salts of carboxymethylcellulose, and soybean polysaccharides.

10. The method according to claim 9, wherein each component (B) is allowed to be present with the gardenia blue colorant in the following proportion per color value of 30 of the gardenia blue colorant:

   (1) propylene glycol alginate: 0.2 to 3 mass%
   (2) carboxymethylcellulose: 0.5 to 2 mass%
   (3) soybean polysaccharides: 5-20 mass%.

11. A method for inhibiting foaming of a colored composition in the form of a solution containing components (A) and (B), the method comprising allowing component (C) to be present together in the solution containing components (A) and (B),
wherein components (A), (B), and (C) are the following:

   (A): gardenia blue colorant;
   (B): at least one member selected from the group consisting of propylene glycol alginate, carboxymethylcellulose, salts of carboxymethylcellulose, and soybean polysaccharides; and
   (C): at least one member selected from the group consisting of lecithin and medium-chain fatty acid oils.

12. The method according to claim 11, wherein the colored composition is an acidic sugar solution having a Brix of 20 to 80.

13. The method according to claim 11, wherein the colored composition is a carbonated beverage.

14. The method according to claim 11, wherein the colored composition contains component (B) in the following proportion per color value of 30 of the gardenia blue colorant:

   (1) propylene glycol alginate: 0.2 to 3 mass%;
   (2) carboxymethylcellulose: 0.5 to 2 mass%;
   (3) soybean polysaccharides: 5-20 mass%.

15. A method for preparing a colored composition in the form of a solution containing components (A) and (B),

   the method being for inhibiting foaming of the colored composition, maintaining acid resistance of the colored composition, and providing the colored composition with clarity,
   the method comprising allowing component (C) to be present together in the solution containing components (A) and (B),

   wherein components (A), (B), and (C) are the following:

   (A): gardenia blue colorant;
   (B): at least one member selected from the group consisting of propylene glycol alginate, carboxymethylcellulose, and salts of carboxymethylcellulose; and
   (C): at least one member selected from the group consisting of lecithin and medium-chain fatty acid oils.

27

Fig. 1

Fig. 2

Fig. 3

Fig. 4

## INTERNATIONAL SEARCH REPORT

| International application No. |
| --- |
| **PCT/JP2023/039001** |

| A. | CLASSIFICATION OF SUBJECT MATTER |
| --- | --- |

*A23L 5/43*(2016.01)i
FI:   A23L5/43

According to International Patent Classification (IPC) or to both national classification and IPC

| B. | FIELDS SEARCHED |
| --- | --- |

Minimum documentation searched (classification system followed by classification symbols)

A23L5/43

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2001-218567 A (SANEI GEN FFI INC.) 14 August 2001 (2001-08-14) technical field to which the invention belongs, page 2, examples | 1, 4-10 |
| Y | Technical field to which the invention belongs, page 2, examples | 2-8, 15 |
| Y | WO 2017/057187 A1 (RIKEN VITAMIN CO., LTD.) 06 April 2017 (2017-04-06) paragraphs [0006]-[0009] | 2-8, 15 |
| A | JP 2021-175379 A (ASAHI SOFT DRINKS CO., LTD.) 04 November 2021 (2021-11-04) | 1-15 |
| A | JP 2015-91946 A (SANEI GEN FFI INC.) 14 May 2015 (2015-05-14) | 1-15 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **04 January 2024** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/039001**

| Patent document cited in search report | | | Publication date (day/month/year) | Patent family member(s) | | | Publication date (day/month/year) |
|---|---|---|---|---|---|---|---|
| JP | 2001-218567 | A | 14 August 2001 | (Family: none) | | | |
| WO | 2017/057187 | A1 | 06 April 2017 | US | 2018/0258286 | A1 | |
| | | | | paragraphs [0010]-[0013] | | | |
| | | | | EP | 3357977 | A1 | |
| JP | 2021-175379 | A | 04 November 2021 | (Family: none) | | | |
| JP | 2015-91946 | A | 14 May 2015 | JP | 2019-143145 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022173312 A
- JP 62019067 A
- WO 2017057187 A
- JP 2019143145 A
- WO 2016068330 A

**Non-patent literature cited in the description**

- **NAKAMURA, H. et al.** *Biosci Biotechnol. Biochem.*, 2001, vol. 65, 2249-2258
- **NAKAMURA, H. et al.** *Biosci Biotechnol. Biochem.*, 2002, vol. 66, 1301-1313
- **FFI REPORTS**. Characteristics and Applications of Soybean Polysaccharides. *FFI Journal*, 2020, vol. 225 (3), 302-306
- Japan's Specifications and Standards for Food Additives. Ministry of Health